# EUROPEAN PATENT APPLICATION

(11) **EP 1 138 445 A1**
(43) Date of publication of application: **04.10.2001**
(21) Application number: 00830235.8
(22) Date of filing: 28.03.2000
(51) Int. Cl.: B25F 5/02, A01D 46/26, B27B 19/09, B25G 1/06

(54) **Hand-grip sliding on a rod to operate a tool mounted at the end of the rod**

(71) Applicant: Buonora, Nicola, 74013 Ginosa (TA) (IT)
(72) Inventor: Buonora, Nicola, 74013 Ginosa (TA) (IT)
(74) Representative: Iannone, Carlo Luigi

(57) **Abstract**

The present invention consists in a hand-grip (1) of cylindrical shape which can slide along a rod (2) having a tool (11) applied at its anterior extremity.
The hand-grip is characterised by the fact that its cylindrical surface is interrupted by an opening having a shape of a cylindrical sector through which it is possible to contact, at the same time, with the palm of the hand and the fingers, the hand-grip and the contiguous surface (2.2) of the rod, to block both them simultaneously together and to permit the switching on of the motor of a tool by means of a lever (3) to operate the tool.

## Description

The present invention deals with a hand-grip suitable to slide along a rod to whose extremity is applied a tool, for instance a pneumatic device able to detach the fruits from the trees.

To carry out works that involves the employment of specific tools to superior heights to those attainable from an operator not provided with ancillary means, rods of predetermined length are currently used, to whose opposite extremities are applied and reciprocally, connected a working tool and the relative driving lever is connected at its turn to a suitable feeding device of pneumatic type or, in alternative, electric or hydraulic.

Through the aforesaid rod, the operator brings the tool in proximity of the point of work and operates the motor through the lever put to the opposite extremity of the rod in correspondence of the hand-grip.

In order to compensate the different distances that can be interposed between the operator and the point of work, the rods can be provided with one or more extension tubes of pre-set length, which can be removed or added by the operator to modify the length of the rod each time it's necessary, by suitable means.

To facilitate this operation, recurrent and expensive in terms of time, telescopic rods are also used which allow a fast change of their length through the simple mutual slide of two or more coaxial tubes followed by the stall of these.

The aforesaid rods, should they be telescopic or extensible in their extensions, present however a series of drawbacks the principal of which is represented by the substantial inconvenience of their employment.

The continuous adjustment of the length of the rod, necessary to reach zones of work situated at different heights, forces in fact the operator to frequently interrupt the work, for a major or minor period of time, depending on the fact that he deals with extension or telescopic rods.

With the purpose to avoid such interruptions and to increase the daily output, the operator is often obliged to use a rod of the maximum necessary length to effect the requested work; this solution however originate further drawbacks as for instance the continuous move of the operator to bring the extremity of the rod to the desired height and the consequent danger of crushing the detached fruits that fall on the surrounding ground, in the case, for instance, of the harvest of fruits with suitable tool for beating or raking.

A further drawback is represented by the fact that the employment of a long rod, makes the use of the same very tiring; it is in fact evident that the weight that the operator. will have to sustain is proportional to the arm of lever determined by the distance among the fixed hand-grip supporting the lever of insertion of the motor, and the tool set to the opposite extremity of the rod.

A last drawback consequent to the employment of rods of elevated length is represented by the fact that the operator is forced to maintain a distance from the point of work equal to the length of the rod and this prevents him from working in proximity of a tree or however from performing other types of works of precision.

In the patent application BA98A000011 entitled "Vibrating and portable tool for the harvest of olive, almonds, coffee, and other fruit in general", is mentioned a mobile hand-grip on a rod including a manual command, which can be controlled by the operator to switch the motor of the vibrating tool applied on the rod 's anterior extremity.

In the European patent application of the same applicant published with n° EPA 0938839A1 of the same applicant, with priority date of said patent application, is mentioned the same sliding hand-grip.

Such hand-grip, even if it slides on the rod, has to be blocked with a collar each time it reaches the wanted position of work, this ulterior operation causing loss of time.

Furthermore when the operator releases the collar, the hand-grip freely slides until it is again blocked, causing difficulties to the operator, especially when he works in an unstable position.

The main aim of the present invention is to overcome said drawbacks furnishing a sliding hand-grip provided with a lever with the insertion of a motor applicable to the rod supporting the tool at its anterior end, which may slide on the rod without any interruption with the same hand that holds simultaneously the rod and operates the tool

Another important aim is to offer a sliding hand-grip, which does not need any collar to block it in the working position, i.e. that stalls automatically, in the same position in which the hand of the operator blocks the rod without any further movement.

Another important purpose is to permit the use, with less labour, during the operations of the tool applied to the extremity of the rod of elevated length, through an automatic reduction of the arm of the lever of the same rod, or of the distance among the hand-grip supporting the lever of insertion of the motor and the tool.

Finally a further purpose is to allow the operator to maintain automatically a closer distance from the point of work independently from the length of the rod which supports the tool.

These purposes are obtained by the hand-grip according to the invention that is described here after in a preferred embodiment non restrictive of further improvements, with the help of the attached sketches showing the following figures:

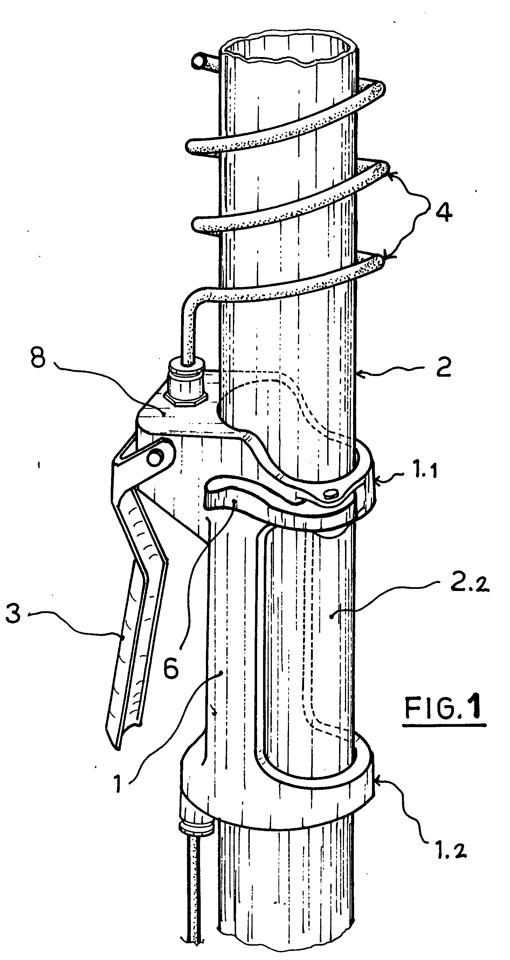

fig. 1: the hand-grip according to the invention applied to a cylindrical rod of support;

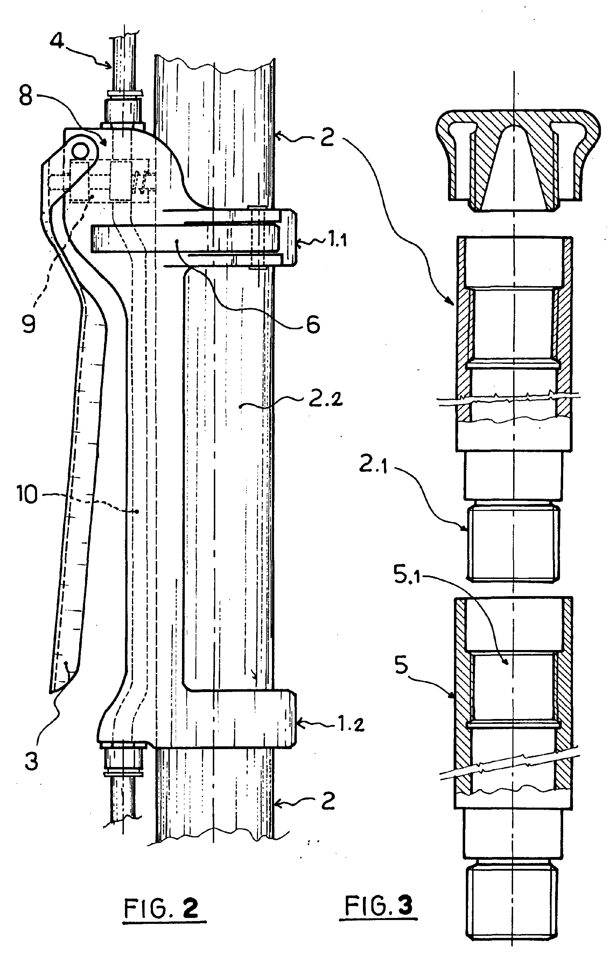

fig. 2: a side view of the hand-grip of which to fig. 1;
fig. 3: a longitudinal section of the rod of support of the tool in correspondence of the two extremities and of the point of interconnection with an extension tube;
fig. 4: the blocking device of the hand-grip to the rod of support in the two operational positions;
fig. 5: the supporting rod with the hand-grip in two different positions;
fig. 6: an example of employment of a rod of elevated length provided with the hand-grip according to the present invention.

Main characteristic of the hand-grip according to the invention is in the fact that, when grasped, it can be blocked contemporarily to the rod with the palm of the hand, so avoiding its sliding on the rod.

The sliding hand-grip according to the invention is constituted by a half cylindrical body 1 connected, at the two extremities, to two cylindrical collars 1.1 and 1.2 having the same bending radius of the aforesaid cavity and whose inside diameter is such to allow the passage and the sliding of a tubular rod 2 to an extremity of which a working tool 11 is applied, for instance a saw, a shear, or other tools able to cause the detachment fruits from the trees such as olives, almonds, coffee and so on.

The hand-grip can then slide and freely rotate on the rod 2 allowing the operator to approach it or to take it away from the tool set on the extremity of the rod, or to position it angularly in order to get a comfortable taking or an optimal balancing of the same rod.

Main characteristic of the hand-grip is that it englobes a driving lever 3, hinged in correspondence of the hollow body 8 coupled to the collar 1.1, that inserts the motor of the tool set to the extremity of the rod.

Said lever 3, side to the half cylindrical body 1, is connected both to the tool through a tube having the shape of a spiral 4 and to a feeding device (fluid in pressure, electric energy etc.) set in proximity of the operator; in case of air compressed feeding, the lever commands a valve 9 set inside the body 8 whose driving causes the passage of compressed air toward the tool set to the extremity of the rod.

In a preferred embodiment, the tube 10 through which the feeding reaches the interception valve 9 is drawn inside the thickness of the side surface of the half cylindrical body 1.

During the use of the tool, a hand is therefore on the hand-grip and it commands the lever 3, the other one holds the rod 2 and makes it slide as regard to the hand-grip nearer or farther away from the tool in real time according to the distance, always varying, between the operator and the point of work.

In order to permit the longitudinal sliding of the hand-grip along the entire surface of the rod 2, said rod necessarily has to have a constant diameter also in the points of interconnection to the possible extension tubes 5; to such aim the extremity 2.1 of the rod is provided with a threaded protrusion, having a diameter smaller than the external one of the same rod, that is coupled preferably by screwing in the cavity 5.1, also threaded, of each extension tube 5.

In this way, only one cylindrical surface is formed of constant diameter also in the points of interconnection among the rod 2 and its extension 5.

The use of a hand-grip and such a rod makes nevertheless necessary their mutual block in order to avoid the continuous grasping of rod and hand-grip when these are in a non-horizontal position.

For this purpose the hand-grip is provided with further means to allow a permanent block, besides a more rapid one to facilitate fast movements of the hand-grip on the rod.

As already mentioned, the rapid block of the hand-grip as to the rod is obtained with the same hand that holds the half cylindrical body 1 on which slides the tubular rod 2, whose portion of side surface 2.2 included among the two collars 1.1 and 1.2 is external to the body 1.

When the hand of the operator holds the body 1 and the lever 3, the palm comes in fact in contact with said external surface 2.2 of the tubular rod 2; at this point, practising with the hand a more or a intense pressure, the operator creates a major or a minor attrition between the palm of the hand and the aforesaid surface 2.2 of the rod, allowing its fast block or the easy slide inside the body 1.

When the distance between the operator and the point of work doesn't change, it is opportune to apply a device of permanent block that binds the hand-grip to the rod in any predetermined position, without forcing the operator to practice a more or a less intense pressure with the palm of the hand.

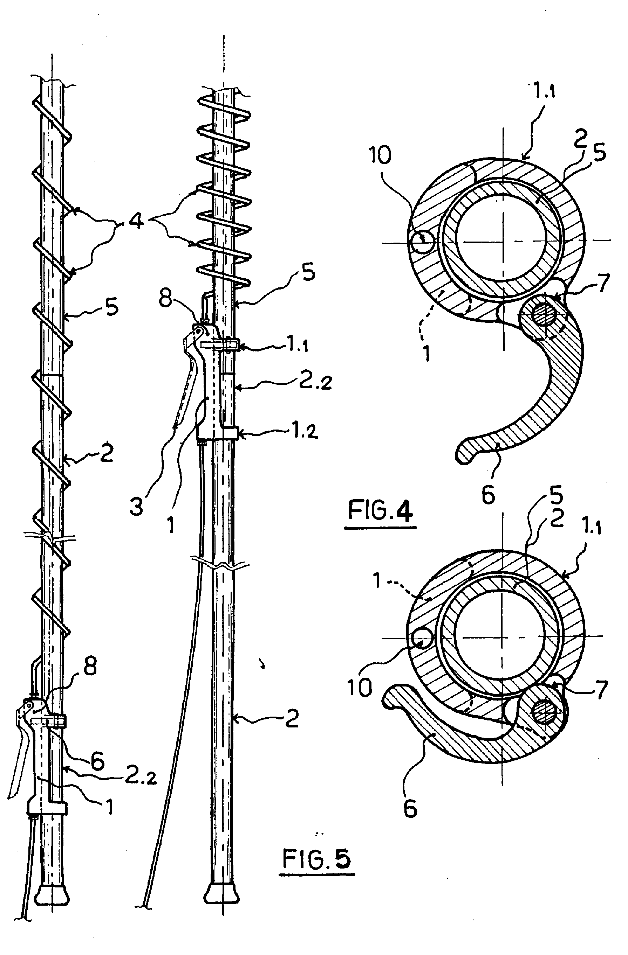

In a preferred embodiment, said blocking device is obtained through a lever 6 applied on the collar 1.1 (see fig. 4), which, causes the cam shape of its hinged extremity 7, is, during its rotation, forcedly put in contact with the surface of the rod preventing any mutual movement between this last and the hand-grip.

In a more complex and expensive execution, the block obtained with the pressure of the palm of the hand on the surface of the rod can be replaced by the pressure of a strip of friction material that acts on the surface of the rod through a lever manually operated.

In this case the half cylindrical body 1 can be replaced by a hollow cylindrical body on the surface of which a window is made in order to allow the strip of friction material to come in contact with the side surface of the rod 2.

In virtue of the particular principle of operation and of the different systems of blocking, the hand-grip can be also used on rods of support of elevated length without involving the rising up of the drawbacks found in the state of art.

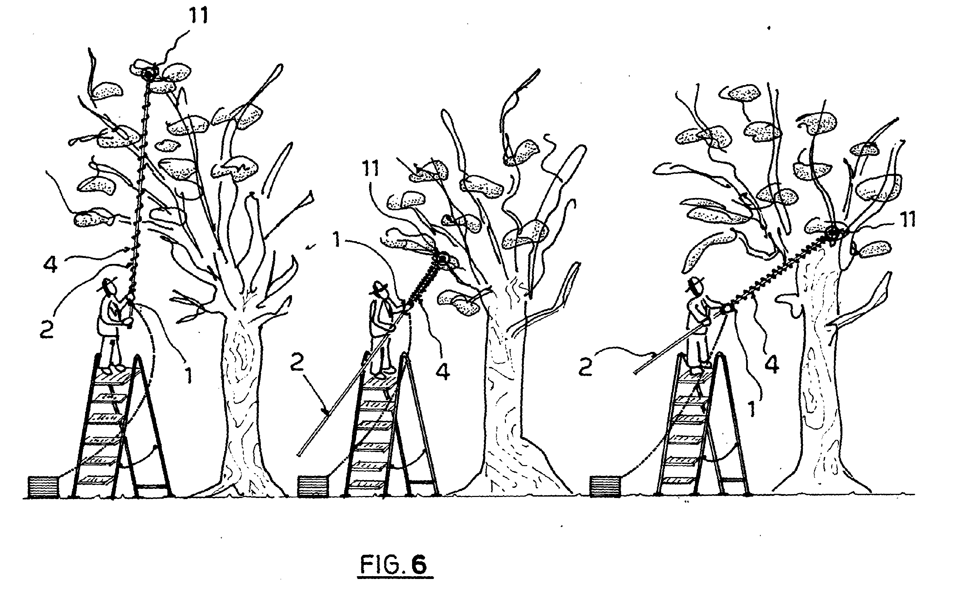

The fig. 6 clearly shows how an operator can harvest the fruits of a whole tree foliage remaining always in the same position, without interruptions to adjust the length of the rod to the different distances between himself and the fruit to pick up, constantly getting an optimal balancing of the rod and an ergonomic taking and, finally, putting himself to a closer distance to the foliage of the tree with the purpose to be able to work with greater precision.

Another important characteristic of the invention is the positioning of the ducts of air or electricity that feed the motor of the tool; the duct is spiral wired along the anterior part of the rod.

This type of positioning permits a further extension of the rod without connecting or reconnecting the duct that feeds the motor of the tool, to the duct inserted in the supplementary extension rod, when it is necessary to obtain a rod of a major length.

## Claims

1. "Hand-grip sliding on a rod to operate a tool mounted at the end of the rod", the rod being tubular with a circular section preferably, **characterised by** the fact that the hand-grip is formed by a half cylindrical body (1), connected to its extremities to two collars (1.1) and (1.2) that guide the sliding, in order to cover only a part of the side surface of the rod (2) inserted inside the cavity of said half cylindrical body and by the fact that the temporary block of the hand-grip to the rod (2) is obtained through the pressure that the palm of the hand practices on the sight area (2.2) of the side surface of the rod included between the two collars (1.1) and (1.2), if the hand squeezes together the hand-grip and the rod (2.2).

2. Hand-grip as claimed in claim 1), **characterised by** the fact that it is provided with a device for allowing the feeding of the motor or other suitable mean to move the tool applied to the extremity of the rod, the device consisting in a lever (3) or, in alternative, in a button or other suitable mean to be operated by the fingers of the hand which tightens the half cylindrical body (1) and the portion of the sight surface (2.2) of the rod (2), whichever is the position of the hand-grip on the aforesaid rod.

3. Hand-grip as claimed in preceding claims, **characterised by** the fact that, besides the pressure of the hand of the operator, in the case the operator wants to block the hand-grip in a fixed position, its block to the rod (2) maybe obtained through a cam (7) hinged to the collar (1.1) and operated by a lever (6), said cam (7) forcedly coming in contact with the surface of the rod (2) during the rotation of the lever (6), in order to prevent, with its pressure, any mutual sliding between the hand-grip and the aforesaid rod.

4. Hand-grip as claimed in preceding claims, **characterised by** the fact that it is longitudinally blocked with the hand in any position included between the two opposite extremities of the rod (2) and by the fact that it can freely be rotated on the rod with the purpose to help the natural movements of the hand that holds it.

5. Hand-grip as claimed in the preceding claims, **characterised by** the fact that the it is provided with a device intercepting the tube of the fluid or the electric current feeding of the motor the tool applied to the extremity of the rod, it is a valve, a switch or other suitable means acting on hydraulic, pneumatic or electric circuits.

6. Tubular rod for the application of the hand-grip as claimed in the preceding claims, **characterised by** the fact that it is lengthened through the addition of one or more tubular extensions (5) of the same external diameter, connected to the rod, for instance through screwing, to permit the sliding of the hand-grip without interruption.

7. Tubular rod combined with sliding hand-grip provided with a device (3) to switch on the motor that operates the tool (11) applied to its extremity

8. Tubular rod as claimed in claims 6 and 7 also provided with a second rubber sliding sleeve to be grasped by the hand which doesn't action the hand-grip(1).

9. Tubular rod as in claim 6,7 and 8 **characterised in that** the duct that feeds the motor of the tool is spiral wired around the anterior end of the rod, in order to be automatically extendible.

10. Ergonomic method to hold a rod preferably cylindrical provided at its extremity with a tool, **characterised by** the application on the aforesaid rod of a sliding and revolving handgrip, in conformity with claim 1, to permit both the driving of the tool and a comfortable grasping and balancing of the rod.
